# EUROPEAN PATENT APPLICATION

(11) **EP 4 129 082 A1**
(43) Date of publication of application: **08.02.2023**
(21) Application number: 21776693.0
(22) Date of filing: 26.03.2021
(51) Int. Cl.: A23L 7/109

(54) **POWDER OR LIQUID COMPOSITION FOR OUTER SKIN OF FILLING-WRAPPED FOOD PRODUCT**

(30) Priority: 27.03.2020 JP 2020059078
(71) Applicant: AJINOMOTO CO., INC., Chuo-ku Tokyo 104-8315 (JP)
(72) Inventor: KURODA, Masahiro, Kawasaki-shi, Kanagawa 210-8681 (JP); NAGAOKA, Suguru, Kawasaki-shi, Kanagawa 210-8681 (JP); MATSUURA, Yoshiki, Kawasaki-shi, Kanagawa 210-8681 (JP); NAKANO, Erika, Kawasaki-shi, Kanagawa 210-8681 (JP)
(74) Representative: Strehl Schübel-Hopf & Partner
(86) International application number: PCT/JP2021/013102
(87) International publication number: WO 2021/193964

(57) **Abstract**

Outer skins for filling-wrapping foods, which may show good dough sheet-making property and good formability, even when produced without using gluten or a food material (e.g., wheat flour, etc.) capable of producing gluten, are provided by the present invention.

The present invention relates to a powder or liquid composition for an outer skin of a filling-wrapping food, containing pregelatinized rice flour with a specific physical property value within a specific range as measured using a texture analyzer.

## Description

### [Technical Field]

The present invention relates to powder or liquid compositions for outer skins of filling-wrapping foods. The present invention also relates to roll-formed product compositions for outer skins of filling-wrapping foods. The present invention further relates to filling-wrapping foods.

### [Background Art]

Gluten produced by kneading wheat flour with water added thereto is known as a causative substance of wheat allergies. Conventionally, to prevent wheat allergies, it has been attempted to produce wheat flour processed foods represented by noodles, breads, cakes, and the like without using wheat flour (gluten) but using rice flour or the like. However, if the amount of wheat flour used is reduced, the dough sheet-making property and the like of the dough (e.g., dough sheet, bread dough, cake dough, etc.) are degraded, and good production may become difficult. Thus, various proposals have been made to produce noodles, breads, cakes, and the like satisfactorily (Patent Literatures 1 to 11).

On the other hand, filling-wrapping foods such as gyoza dumpling and the like are generally produced by covering an inside ingredient with an outer skin (dough sheet) mainly composed of a wheat flour. Therefore, the outer skin is required to have good forming suitability (formability) when covering the inside ingredient, in addition to dough sheet-making property. In the aforementioned Patent Literatures 1 to 11, production of the outer skin of filling-wrapping foods that is good not only in dough sheet-making property but also in formability, without using wheat flour was not studied at all.

### [Citation List]

### [Patent Literature]

[PTL 1]
   JP-A-2017-153425
[PTL 2]
   JP-A-2011-83252
[PTL 3]
   WO 2008/072656
[PTL 4]
   JP-A-2006-223205
[PTL 5]
   JP-A-2007-215401
[PTL 6]
   WO 2005/087011
[PTL 7]
   JP-A-2007-174911
[PTL 8]
   JP-A-2004-350559
[PTL 9]
   JP-A-2004-267144
[PTL 10]
   WO 2004/080186
[PTL 11]
   JP-A-2019-118318

### [Summary of Invention]

### [Technical Problem]

The present invention has been made in view of the above situation, and an object of the present invention is to provide outer skins for filling-wrapping foods, which may show good dough sheet-making property and good formability, even when produced without using gluten or a food material (e.g., wheat flour, etc.) capable of producing gluten.

### [Solution to Problem]

The present inventors have conducted intensive studies in an attempt to achieve the aforementioned object and found that outer skins for filling-wrapping foods, which show good dough sheet-making property, as well as good formability, can be produced by using a pregelatinized rice flour with a specific physical property value within a specific range as measured using a texture analyzer, and without using gluten or a food material (e.g., wheat flour, etc.) capable of producing gluten. They have conducted further studies and completed the present invention.

That is, the present invention provides the following.
[1] A powder or liquid composition for an outer skin of a filling-wrapping food, comprising a pregelatinized rice flour having an area value under positive peak of 9 to 206 g·sec as measured using a texture analyzer and according to the following method:
   [measurement method of area value under positive peak]
   (1) pregelatinized rice flour as a sample is dissolved in a 3 weight-fold amount of water, and stirred in a 500 mL beaker with a bottom diameter of 9 cm at 25°C, stirring speed 17000 rpm for 2 minutes
   (2) the obtained pregelatinized rice flour aqueous solution is filled up by leveling into a 65 mL cup container with opening diameter 55 mm and height 42 mm
   (3) the cup container filled with the pregelatinized rice flour aqueous solution is set on a texture analyzer equipped with a 25 mm diameter acrylic cylinder as a jig such that the cup container is directly under the jig
   (4) 5 minutes after completion of the stirring in the aforementioned (1), at 25°C, the jig attached to the aforementioned texture analyzer is descended by 25 mm at a speed of 2 mm/sec with a load of 100 g from the position at a height of 67 mm from the bottom of the installed cup container to bring same into contact with the gelatinized rice flour aqueous solution filled in the cup container, further descended straight down by 10 mm at the same speed, and ascended by 35 mm to its original position at a speed of 2 mm/sec
   (5) the stress (g) applied to the jig in 35 seconds from the start of the descending to the return to the original position of the jig in the aforementioned (4) is detected with a detection threshold value of 5 g, and a stress-time curve plotting the stress (g) on the vertical axis and the time (sec) on the horizontal axis is drawn
   (6) the peak area (g·sec) of the first peak in the obtained stress-time curve is determined
   (7) the aforementioned operations (4) to (6) are repeated six times in total within 20 minutes from the completion of the stirring in the aforementioned (1)
   (8) among the obtained peak areas of the 1st to the 6th measurements, the average value of the peak areas of the 2nd to the 6th measurements is calculated, and the average value is taken as the "area value under positive peak".
[2] The powder or liquid composition of [1], wherein the aforementioned pregelatinized rice flour has a maximum stress of negative peak of -25 to 0 g as measured using a texture analyzer and according to the following method:
   [Measurement method of maximum stress of negative peak]
   (1) pregelatinized rice flour as a sample is dissolved in a 3 weight-fold amount of water, and stirred in a 500 mL beaker with a bottom diameter of 9 cm at 25°C, stirring speed 17000 rpm for 2 minutes
   (2) the obtained pregelatinized rice flour aqueous solution is filled up by leveling into a 65 mL cup container with opening diameter 55 mm and height 42 mm
   (3) the cup container filled with the pregelatinized rice flour aqueous solution is set on a texture analyzer equipped with a 25 mm diameter acrylic cylinder as a jig such that the cup container is directly under the jig
   (4) 5 minutes after completion of the stirring in the aforementioned (1), at 25°C, the jig attached to the aforementioned texture analyzer is descended by 25 mm at a speed of 2 mm/sec with a load of 100 g from the position at a height of 67 mm from the bottom of the installed cup container to bring same into contact with the gelatinized rice flour aqueous solution filled in the cup container, further descended straight down by 10 mm at the same speed, and ascended by 35 mm to its original position at a speed of 2 mm/sec
   (5) the stress (g) applied to the jig in 35 seconds from the start of the descending to the return to the original position of the jig in the aforementioned (4) is detected with a detection threshold value of 5 g, and a stress-time curve plotting the stress (g) on the vertical axis and the time (sec) on the horizontal axis is drawn
   (6) the peak top stress (g) of the second peak in the obtained stress-time curve is determined
   (7) the aforementioned operations (4) to (6) are repeated six times in total within 20 minutes from the completion of the stirring in the aforementioned (1)
   (8) among the obtained peak top stress of the 1st to the 6th measurements, the average value of the peak top stress of the 2nd to the 6th measurements is calculated, and the average value is taken as the "maximum stress of negative peak".
[3] The powder or liquid composition of [1] or [2], wherein the area value under positive peak is 12 to 198 g·sec.
[4] The powder or liquid composition any one of [1] to [3], wherein the area value under positive peak is 20 to 190 g·sec.
[5] The powder or liquid composition of any one of [1] to [4], wherein the maximum stress of negative peak is -23 to -1 g.
[6] The powder or liquid composition of any one of [1] to [5], wherein the maximum stress of negative peak is -21 to -2 g.
[7] The powder or liquid composition of any one of [1] to [6], further comprising a thickening polysaccharide.
[8] The powder or liquid composition of any one of [1] to [7], further comprising a β-rice flour.
[9] The powder or liquid composition of any one of [1] to [8], wherein a content of the pregelatinized rice flour is 3 to 50 wt% with respect to a solid content of the powder or liquid composition.
[10] The powder or liquid composition of any one of [1] to [9], wherein the content of the pregelatinized rice flour is 5 to 40 wt% with respect to the solid content of the powder or liquid composition.
[11] The powder or liquid composition of any one of [1] to [10], wherein the content of the pregelatinized rice flour is 10 to 30 wt% with respect to the solid content of the powder or liquid composition.
[12] The powder or liquid composition of any one of [1] to [11], wherein the content of the pregelatinized rice flour is 15 to 25 wt% with respect to the solid content of the powder or liquid composition.
[13] The powder or liquid composition of any one of [7] to [12], wherein a content of the thickening polysaccharide is 0.2 to 7.5 wt% with respect to the solid content of the powder or liquid composition.
[14] The powder or liquid composition of any one of [7] to [13], wherein the content of the thickening polysaccharide is 0.4 to 4.5 wt% with respect to the solid content of the powder or liquid composition.
[15] The powder or liquid composition of any one of [7] to [14], wherein the content of the thickening polysaccharide is 0.7 to 3.0 wt% with respect to the solid content of the powder or liquid composition.
[16] The composition of any one of [1] to [15], wherein the composition is substantially free of gluten.
[17] A roll-formed product composition for an outer skin of a filling-wrapping food, comprising a pregelatinized rice flour having an area value under positive peak of 9 to 206 g·sec as measured using a texture analyzer and according to the method described in [1].
[18] The roll-formed product composition of [17], wherein the aforementioned pregelatinized rice flour has a maximum stress of negative peak of -25 to 0 g as measured using a texture analyzer and according to the method described in [2].
[19] The roll-formed product composition of [17] or [18], wherein the area value under positive peak is 12 to 198 g·sec.
[20] The roll-formed product composition of any one of [17] to [19], wherein the area value under positive peak is 20 to 190 g·sec.
[21] The roll-formed product composition of any one of [17] to [20], wherein the maximum stress of negative peak is -23 to -1 g.
[22] The roll-formed product composition of any one of [17] to [21], wherein the maximum stress of negative peak is -21 to -2 g.
[23] The roll-formed product composition of any one of [17] to [22], further comprising a thickening polysaccharide.
[24] The roll-formed product composition of any one of [17] to [23], further comprising a β-rice flour and water.
[25] The roll-formed product composition of any one of [17] to [24], wherein a content of the pregelatinized rice flour is 3 to 35 wt% with respect to the roll-formed product composition.
[26] The roll-formed product composition of any one of [17] to [25], wherein the content of the pregelatinized rice flour is 6 to 25 wt% with respect to the roll-formed product composition.
[27] The roll-formed product composition of any one of [17] to [26], wherein the content of the pregelatinized rice flour is 9 to 18 wt% with respect to the roll-formed product composition.
[28] The roll-formed product composition of any one of [23] to [27], wherein the content of the thickening polysaccharide is 0.1 to 5 wt% with respect to the roll-formed product composition.
[29] The roll-formed product composition of any one of [23] to [28], wherein the content of the thickening polysaccharide is 0.3 to 3 wt% with respect to the roll-formed product composition.
[30] The roll-formed product composition of any one of [23] to [29], wherein the content of the thickening polysaccharide is 0.5 to 2 wt% with respect to the roll-formed product composition.
[31] The roll-formed product composition of any one of [17] to [30], wherein a content of water is 15 to 45 wt% with respect to the roll-formed product composition.
[32] The roll-formed product composition of any one of [17] to [31], wherein the content of water is 20 to 40 wt% with respect to the roll-formed product composition.
[33] The roll-formed product composition of any one of [17] to [32], wherein the content of water is 25 to 35 wt% with respect to the roll-formed product composition.
[34] The roll-formed product composition of any one of [17] to [33], wherein the composition is substantially free of gluten.
[35] A filling-wrapping food comprising at least an inside ingredient and an outer skin covering the inside ingredient, wherein the outer skin comprises a roll-formed product comprising a pregelatinized rice flour having an area value under positive peak of 9 to 206 g·sec as measured using a texture analyzer and according to the method described in [1].
[36] The filling-wrapping food of [35], wherein the aforementioned pregelatinized rice flour has a maximum stress of negative peak of -25 to 0 g as measured using a texture analyzer and according to the method described in [2].
[37] The filling-wrapping food of [35] or [36], wherein the area value under positive peak is 12 to 198 g·sec.
[38] The filling-wrapping food of any one of [35] to [37], wherein the area value under positive peak is 20 to 190 g·sec.
[39] The filling-wrapping food of any one of [35] to [38], wherein the maximum stress of negative peak is -23 to -1 g.
[40] The filling-wrapping food of any one of [35] to [39], wherein the maximum stress of negative peak is -21 to -2 g.
[41] The filling-wrapping food of any one of [35] to [40], wherein the roll-formed product composition further comprises a thickening polysaccharide.
[42] The filling-wrapping food of any one of [35] to [41], wherein the roll-formed product composition further comprises a β-rice flour and water.
[43] The filling-wrapping food of any one of [35] to [42], wherein a content of the pregelatinized rice flour in the roll-formed product composition is 3 to 35 wt% with respect to the roll-formed product composition.
[44] The filling-wrapping food of any one of [35] to [43], wherein the content of the pregelatinized rice flour in the roll-formed product composition is 6 to 25 wt% with respect to the roll-formed product composition.
[45] The filling-wrapping food of any one of [35] to [44], wherein the content of the pregelatinized rice flour in the roll-formed product composition is 9 to 18 wt% with respect to the roll-formed product composition.
[46] The filling-wrapping food of any one of [41] to [45], wherein a content of the thickening polysaccharide in the roll-formed product composition is 0.1 to 5 wt% with respect to the roll-formed product composition.
[47] The filling-wrapping food of any one of [41] to [46], wherein the content of the thickening polysaccharide in the roll-formed product composition is 0.3 to 3 wt% with respect to the roll-formed product composition.
[48] The filling-wrapping food of any one of [41] to [47], wherein the content of the thickening polysaccharide in the roll-formed product composition is 0.5 to 2 wt% with respect to the roll-formed product composition.
[49] The filling-wrapping food of any one of [35] to [48], wherein a content of water in the roll-formed product composition is 15 to 45 wt% with respect to the roll-formed product composition.
[50] The filling-wrapping food of any one of [35] to [49], wherein the content of water in the roll-formed product composition is 20 to 40 wt% with respect to the roll-formed product composition.
[51] The filling-wrapping food of any one of [35] to [50], wherein the content of water in the roll-formed product composition is 25 to 35 wt% with respect to the roll-formed product composition.
[52] The filling-wrapping food of any one of [35] to [51], wherein the roll-formed product composition is substantially free of gluten.
[53] An outer skin for a filling-wrapping food, comprising a roll-formed product comprising a pregelatinized rice flour having an area value under positive peak of 9 to 206 g·sec as measured using a texture analyzer and according to the method described in [1].
[54] The outer skin of [53], wherein the aforementioned pregelatinized rice flour has a maximum stress of negative peak of -25 to 0 g as measured using a texture analyzer and according to the method described in [2].
[55] The outer skin of [53] or [54], wherein the area value under positive peak is 12 to 198 g·sec.
[56] The outer skin of any one of [53] to [55], wherein the area value under positive peak is 20 to 190 g·sec.
[57] The outer skin of any one of [53] to [56], wherein the maximum stress of negative peak is -23 to -1 g.
[58] The outer skin of any one of [53] to [57], wherein the maximum stress of negative peak is -21 to -2 g.
[59] The outer skin of any one of [53] to [58], wherein the roll-formed product composition further comprises a thickening polysaccharide.
[60] The outer skin of any one of [53] to [59], wherein the roll-formed product composition further comprises a β-rice flour and water.
[61] The outer skin of any one of [53] to [60], wherein a content of the pregelatinized rice flour in the roll-formed product composition is 3 to 35 wt% with respect to the roll-formed product composition.
[62] The outer skin of any one of [53] to [61], wherein the content of the pregelatinized rice flour in the roll-formed product composition is 6 to 25 wt% with respect to the roll-formed product composition.
[63] The outer skin of any one of [53] to [62], wherein the content of the pregelatinized rice flour in the roll-formed product composition is 9 to 18 wt% with respect to the roll-formed product composition.
[64] The outer skin of any one of [59] to [63], wherein a content of the thickening polysaccharide in the roll-formed product composition is 0.1 to 5 wt% with respect to the roll-formed product composition.
[65] The outer skin of any one of [59] to [64], wherein the content of the thickening polysaccharide in the roll-formed product composition is 0.3 to 3 wt% with respect to the roll-formed product composition.
[66] The outer skin of any one of [59] to [65], wherein the content of the thickening polysaccharide in the roll-formed product composition is 0.5 to 2 wt% with respect to the roll-formed product composition.
[67] The outer skin of any one of [53] to [66], wherein a content of water in the roll-formed product composition is 15 to 45 wt% with respect to the roll-formed product composition.
[68] The outer skin of any one of [53] to [67], wherein the content of water in the roll-formed product composition is 20 to 40 wt% with respect to the roll-formed product composition.
[69] The outer skin of any one of [53] to [68], wherein the content of water in the roll-formed product composition is 25 to 35 wt% with respect to the roll-formed product composition.
[70] The outer skin of any one of [53] to [69], wherein the roll-formed product composition is substantially free of gluten.
[71] A method for producing an outer skin of a filling-wrapping food, comprising adding water as necessary to a powder or liquid composition comprising a pregelatinized rice flour having an area value under positive peak of 9 to 206 g·sec as measured using a texture analyzer and according to the method described in [1], and roll-forming the mixture.
[72] The production method of [71], wherein the aforementioned pregelatinized rice flour has a maximum stress of negative peak of -25 to 0 g as measured using a texture analyzer and according to the method described in [2].
[73] The production method of [71] or [72], wherein the area value under positive peak is 12 to 198 g·sec.
[74] The production method of any one of [71] to [73], wherein the area value under positive peak is 20 to 190 g·sec.
[75] The production method of any one of [71] to [74], wherein the maximum stress of negative peak is -23 to -1 g.
[76] The production method of any one of [71] to [75], wherein the maximum stress of negative peak is -21 to -2 g.
[77] The production method of any one of [71] to [76], wherein the powder or liquid composition further comprises a thickening polysaccharide.
[78] The production method of any one of [71] to [77], wherein the powder or liquid composition further comprises a β-rice flour.
[79] The production method of any one of [71] to [78], wherein a content of the pregelatinized rice flour in the powder or liquid composition is 3 to 50 wt% with respect to a solid content of the powder or liquid composition.
[80] The production method of any one of [71] to [79], wherein the content of the pregelatinized rice flour in the powder or liquid composition is 5 to 40 wt% with respect to the solid content of the powder or liquid composition.
[81] The production method of any one of [71] to [80], wherein the content of the pregelatinized rice flour in the powder or liquid composition is 10 to 30 wt% with respect to the solid content of the powder or liquid composition.
[82] The production method of any one of [71] to [81], wherein the content of the pregelatinized rice flour in the powder or liquid composition is 15 to 25 wt% with respect to the solid content of the powder or liquid composition.
[83] The production method of any one of [77] to [82], wherein a content of the thickening polysaccharide in the powder or liquid composition is 0.2 to 7.5 wt% with respect to the solid content of the powder or liquid composition.
[84] The production method of any one of [77] to [83], wherein the content of the thickening polysaccharide in the powder or liquid composition is 0.4 to 4.5 wt% with respect to the solid content of the powder or liquid composition.
[85] The production method of any one of [77] to [84], wherein the content of the thickening polysaccharide in the powder or liquid composition is 0.7 to 3.0 wt% with respect to the solid content of the powder or liquid composition.
[86] The production method of any one of [71] to [85], wherein the powder or liquid composition is substantially free of gluten.

### [Advantageous Effects of Invention]

According to the present invention, outer skins for filling-wrapping foods, which can show good dough sheet-making property and good formability, even when produced without using gluten or a food material (e.g., wheat flour, etc.) capable of producing gluten, can be provided.

The present invention can also provide powder or liquid compositions preferably used as raw materials of the outer skin of filling-wrapping foods which shows good dough sheet-making property and good formability.

The present invention can also provide roll-formed product compositions preferably used as the outer skin of filling-wrapping foods which shows good dough sheet-making property and good formability.

The present invention can also provide filling-wrapping foods in which an inside ingredient is covered with an outer skin showing good dough sheet-making property and good formability.

### [Brief Description of Drawings]

[Fig. 1]

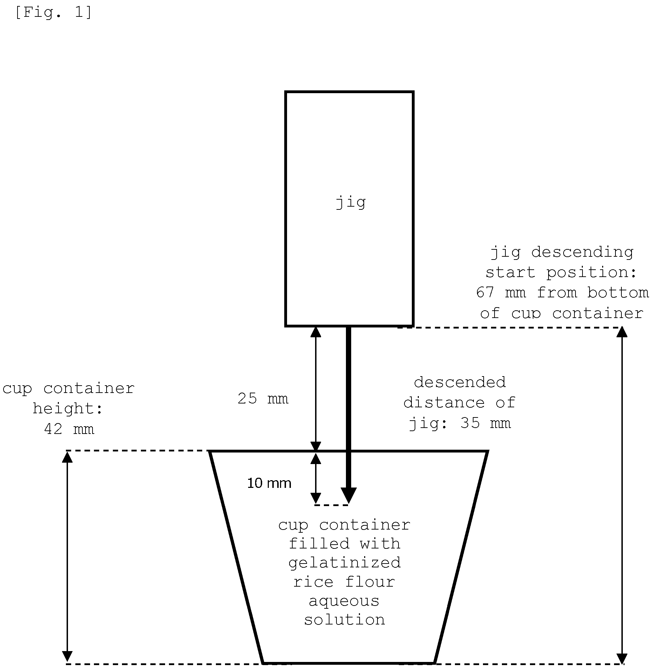

   Fig. 1 is a conceptual diagram showing the positional relationship between a jig attached to a texture analyzer (not shown) and a cup container filled with an aqueous pregelatinized rice flour solution, and descending distances of the jig, in the measurement of physical properties of pregelatinized rice flour by a texture analyzer.
[Fig. 2]

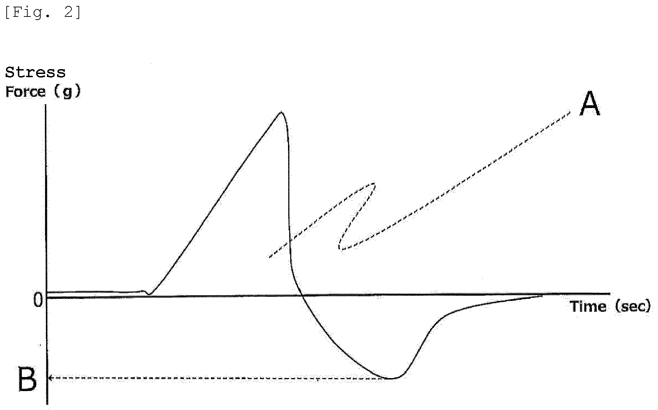

   Fig. 2 is a graph showing a typical example of a stress-time curve (vertical axis: stress, horizontal axis: time) in the measurement of physical properties of pregelatinized rice flour by a texture analyzer. The area of the portion A in the figure is the "peak area of the first peak", and the stress of B in the figure is the "peak top stress of the second peak".

### [Description of Embodiments]

One of the characteristics of the powder or liquid composition of the present invention is that it contains pregelatinized rice flour with a specific physical property value within a specific range as measured using a texture analyzer. In the present invention, the "powder" means an aggregate of multiple particles. In the present invention, the "liquid" means those exhibiting flowability at normal temperature (25°C) and normal pressure (100 kPa), and is a concept encompassing solution, dispersion, suspension, emulsion, and the like, as well as paste, slurry, and the like. In the present invention, the "powder or liquid composition" is a general term for powder compositions and liquid compositions. That is, it is a concept encompassing both powder compositions and liquid compositions.

The pregelatinized rice flour used in the present invention preferably shows the "area value under positive peak" within a specific range as measured using a texture analyzer. The area value under positive peak is an index relating to the hardness of aqueous solution of pregelatinized rice flour. Using pregelatinized rice flour having an area value under positive peak within a specific range, the outer skin of filling-wrapping foods which is superior in formability (forming suitability when covering the inside ingredient of filling-wrapping foods with the outer skin) and dough sheet-making property (suitability of the step of rolling dough by using a roll dough sheeter or the like in the production of the outer skin) can be produced even when gluten and a food material capable of producing gluten (e.g., wheat flour etc.) are not used.

In the present invention, the "area value under positive peak" of the pregelatinized rice flour is measured according to the following steps (1) to (8) and using a texture analyzer.
(1) Pregelatinized rice flour as a sample is dissolved in a 3 weight-fold amount of water, and stirred in a 500 mL beaker with a bottom diameter of 9 cm at 25°C, stirring speed 17000 rpm for 2 minutes.
(2) The obtained pregelatinized rice flour aqueous solution is filled up by leveling into a 65 mL cup container with opening diameter 55 mm and height 42 mm.
(3) The cup container filled with the pregelatinized rice flour aqueous solution is set on a texture analyzer equipped with a 25 mm diameter acrylic cylinder as a jig such that the cup container is directly under the jig.
(4) 5 minutes after completion of the stirring in the aforementioned (1), at 25°C, the jig attached to the aforementioned texture analyzer is descended by 25 mm at a speed of 2 mm/sec with a load of 100 g from the position at a height of 67 mm from the bottom of the installed cup container to bring same into contact with the gelatinized rice flour aqueous solution filled in the cup container, further descended straight down by 10 mm at the same speed, and ascended by 35 mm to its original position at a speed of 2 mm/sec.
(5) The stress (g) applied to the jig in 35 seconds from the start of the descending to the return to the original position of the jig in the aforementioned (4) is detected with a detection threshold value of 5 g, and a stress-time curve plotting the stress (g) on the vertical axis and the time (sec) on the horizontal axis is drawn.
(6) The peak area (g·sec) of the first peak in the obtained stress-time curve is determined.
(7) The aforementioned operations (4) to (6) are repeated six times in total within 20 minutes from the completion of the stirring in the aforementioned (1).
(8) Among the obtained peak areas of the 1st to the 6th measurements, the average value of the peak areas of the 2nd to the 6th measurements is calculated, and the average value is taken as the "area value under positive peak".

In the present invention, the texture analyzer used for the measurement of the physical property value of pregelatinized rice flour is specifically "Texture Analyzer TA.XT.plus" manufactured by EKO Instruments Co., Ltd.

In the aforementioned (1), as water in which the pregelatinized rice flour is dissolved, distillation water at 25°C can be used. A pregelatinized rice flour aqueous solution may be stirred in a 500 mL beaker with the bottom diameter of 9 cm. The pregelatinized rice flour aqueous solution can be specifically stirred using "KAI Multi Blender DK5033" (attachment: masher) manufactured by Kai Corporation. It is preferable to confirm by visual observation that the pregelatinized rice flour aqueous solution is uniformly mixed after stirring.

In the aforementioned (2), the cup container to be filled with the pregelatinized rice flour aqueous solution has a circular opening with a diameter of 55 mm, a height of 42 mm, and a volume of 65 mL. As the cup container to be filled with the pregelatinized rice flour aqueous solution, "IK55 floral PS" manufactured by ITOKEI. Co., Ltd. can be specifically used. The cup container is filled with the gelatinized rice flour aqueous solution such that substantially no air enters the cup container (that is, the air that entered the cup container is not visually confirmed). After filling the cup container with the pregelatinized rice flour aqueous solution, the top surface thereof is leveled with a palette knife to make a flat surface, whereby the pregelatinized rice flour aqueous solution can be filled up in the cup container by leveling.

In the aforementioned (3), the cup container filled with the pregelatinized rice flour aqueous solution is provided at a position at which the center of the jig (cylindrical acrylic cylinder with a diameter of 25 mm) attached to the texture analyzer overlaps the center of the cup container when the jig is descended directly down below and viewed from directly above the jig.

Fig. 1 shows a conceptual diagram showing the positional relationship between the jig attached to the texture analyzer and the cup container filled with the pregelatinized rice flour aqueous solution, and descending distances of the jig in the aforementioned (4). Since Fig. 1 is a conceptual diagram, the scale of the jig and the cup container and the like may differ from the actual scale.

The operation of the aforementioned (4) may be started 5 minutes after completion of the stirring in the aforementioned (1). It is preferably started within 8 minutes after completion of the stirring at the latest.

The specific settings of the "Texture Analyzer TA.XT.plus" manufactured by EKO Instruments Co., Ltd. to obtain a stress-time curve in the aforementioned (5) are as follows.
<setting of texture analyzer>
·Test Mode: Compression
·Test Speed: 2 mm/sec
·Post-Test Speed: 2 mm/sec
·Target Mode: Distance
·Force: 100 g
·Distance: 35 mm
·Trigger Type: Button
·Trigger Force: 5 g

A typical example of the stress-time curve obtained in the aforementioned (5) is shown in Fig. 2. Since Fig. 2 is a typical example, the curve shown in Fig. 2 may not match the actual curve.

In the aforementioned (6), the "first peak" in the stress-time curve refers to a peak confirmed during the period from when the descended jig contacts the pregelatinized rice flour aqueous solution to when the jig is ascended after descending and the stress on the jig decreases to 0 g. In the below-mentioned "second peak" (also to be referred to as "negative peak"), stress value (g) of the peak top is a negative numerical value, whereas the stress value (g) of the peak top of the first peak is a positive numerical value, and the first peak is sometimes referred to as "positive peak". The "peak area of the first peak" refers to the area (g-sec) of the portion surrounded by the curve of the first peak and the horizontal axis (that is, curve of the first peak and horizontal axis of the graph form the outer circumference) (part A in Fig. 2).

The area value under positive peak of the pregelatinized rice flour used in the present invention is preferably not less than 9 g·sec, more preferably not less than 12 g·sec, further preferably not less than 15 g·sec, particularly preferably not less than 20 g·sec. The area value under positive peak is preferably not more than 206 g·sec, more preferably not more than 198 g·sec, particularly preferably not more than 190 g.sec. For example, the area value under positive peak is preferably 9 to 206 g·sec, more preferably 12 to 198 g·sec, particularly preferably 20 to 190 g-sec.

The pregelatinized rice flour used in the present invention preferably shows a "maximum stress of negative peak" within a specific range as measured using a texture analyzer. The maximum stress of negative peak is an index relating to the stickiness of the pregelatinized rice flour aqueous solution. Using pregelatinized rice flour having a maximum stress of negative peak within a specific range, the outer skin of filling-wrapping foods which is superior in formability and dough sheet-making property can be produced even when gluten and a food material capable of producing gluten (e.g., wheat flour etc.) are not used.

In the present invention, the "maximum stress of negative peak" of the pregelatinized rice flour is measured using a texture analyzer and according to the following steps (1) to (8) .
(1) Pregelatinized rice flour as a sample is dissolved in a 3 weight-fold amount of water, and stirred in a 500 mL beaker with a bottom diameter of 9 cm at 25°C, stirring speed 17000 rpm for 2 minutes.
(2) The obtained pregelatinized rice flour aqueous solution is filled up by leveling into a 65 mL cup container with opening diameter 55 mm and height 42 mm.
(3) The cup container filled with the pregelatinized rice flour aqueous solution is set on a texture analyzer equipped with a 25 mm diameter acrylic cylinder as a jig such that the cup container is directly under the jig.
(4) 5 minutes after completion of the stirring in the aforementioned (1), at 25°C, the jig attached to the aforementioned texture analyzer is descended by 25 mm at a speed of 2 mm/sec with a load of 100 g from the position at a height of 67 mm from the bottom of the installed cup container to bring same into contact with the gelatinized rice flour aqueous solution filled in the cup container, further descended straight down by 10 mm at the same speed, and ascended by 35 mm to its original position at a speed of 2 mm/sec.
(5) The stress (g) applied to the jig in 35 seconds from the start of the descending to the return to the original position of the jig in the aforementioned (4) is detected with a detection threshold value of 5 g, and a stress-time curve plotting the stress (g) on the vertical axis and the time (sec) on the horizontal axis is drawn.
(6) The peak top stress (g) of the second peak in the obtained stress-time curve is determined.
(7) The aforementioned operations (4) to (6) are repeated six times in total within 20 minutes from the completion of the stirring in the aforementioned (1).
(8) Among the obtained peak top stress of the 1st to the 6th measurements, the average value of the peak top stress of the 2nd to the 6th measurements is calculated, and the average value is taken as the "maximum stress of negative peak".

The aforementioned steps (1) to (5) can be performed in the same manner as in the steps (1) to (5) in the measurement of the "area value under positive peak". The texture analyzer used in the measurement of the maximum stress of negative peak is "Texture Analyzer TA.XT.plus" manufactured by EKO Instruments Co., Ltd. as in the case of the area value under positive peak.

In the aforementioned (6), the "second peak" in the stress-time curve refers to a peak whose stress value (g) at the peak top is a negative numerical value, which is confirmed next to the first peak (sometimes referred to as "negative peak"). The "stress at the peak top of the second peak" refers to the stress (g) at the highest portion (peak top) of the second peak (B in Fig. 2).

The maximum stress of the negative peak of the pregelatinized rice flour used in the present invention is preferably not less than -25 g, more preferably not less than - 23 g, particularly preferably not less than -21 g. The maximum stress of the negative peak is preferably not more than 0 g, more preferably not more than -1 g, particularly preferably not more than -2 g. For example, the maximum stress of the negative peak is preferably -25 to 0 g, more preferably -23 to -1 g, particularly preferably -21 to -2 g.

The pregelatinized rice flour used in the present invention is not particularly limited as regards the kind of the raw material rice thereof as long as the above-mentioned property value measured using a texture analyzer falls within a specific range, and the raw material rice of the pregelatinized rice flour used in used in the present invention may be any of non-glutinous rice and glutinous rice. The origin and variety of the raw material rice of the pregelatinized rice flour used in the present invention are not particularly limited, and the raw material rice of the pregelatinized rice flour used in the present invention may be new rice, old rice, very old rice or the like. The degree of rice polishing of the raw material rice of the pregelatinized rice flour used in the present invention is also not particularly limited, and polished rice after rice polishing, or unpolished rice or the like may be used.

The pregelatinized rice flour in the present specification means pregelatinized rice flour in a broad sense. The pregelatinized rice flour used in the present invention includes, for example, pregelatinized rice starch obtained by subjecting the rice starch isolated and purified from rice to a pregelatinization (gelatinization) treatment or the like. When pregelatinized rice starch is used as the pregelatinized rice flour, the pregelatinized rice starch may be subjected to other processing treatments in addition to the pregelatinization treatment. Examples of the processing treatment include physical treatments (e.g., granulation treatment, heat-moisture treatment, ball mill treatment, finely pulverizing treatment, heat treatment, hot water treatment, bleaching treatment, sterilizing treatment, acid treatment, alkali treatment, etc.) other than the pregelatinized treatment, chemical treatments (e.g., esterification treatment, etherification treatment, crosslinking treatment, oxidation treatment), enzymatical treatments, and the like.

The gelatinization degree of the pregelatinized rice flour used in the present invention is preferably not less than 50%, more preferably not less than 80%. The upper limit of the gelatinization degree of the pregelatinized rice flour used in the present invention is not particularly limited, and the gelatinization degree may be not more than 100%.

In the present invention, the gelatinization degree of the pregelatinized rice flour is determined by the glucoamylase second method.

The form of the pregelatinized rice flour used in the present invention is preferably a powder (form in which a plurality of particles are aggregated). The particle size of the pregelatinized rice flour used in the present invention is not particularly limited, and the pregelatinized rice flour used in the present invention may contain granulated rice flour.

The production method of pregelatinized rice flour used in the present invention is not particularly limited, and it can be produced by a method known per se or a method analogous thereto. Specifically, the pregelatinized rice flour used in the present invention may be obtained, for example, by washing polished glutinous rice with water, soaking same in water, followed by steaming into rice cake, baking same in white, and then crushing same (Kanbaiko, etc.); by steam cooking glutinous rice, drying same, roasting same, and milling same (Johayako, etc.); by steam cooking non-glutinous rice, drying same, roasting same, and milling same (Namihayako, etc.); by soaking polished glutinous rice in water, steaming and drying same to give dried boiled rice, roughly crushing same (Domyojiko, etc.); by washing glutinous rice with water, drying same, followed by roasting and milling without steam cooking (Rakuganko, etc.); by soaking glutinous rice in water, steaming and drying same, followed by pulverization and roasting little by little (Jonanko, etc.); by heating non-glutinous rice or glutinous rice, and pulverizing same; or the like. In addition, the production facility of the pregelatinized rice flour used in the present invention is not particularly limited, and pregelatinized rice flour obtained by, for example, a method of gelatinizing and drying a slurry of rice flour and rice starch with a drum dryer, a method of adding water to rice flour or rice starch and pressurizing and heat gelatinizing same with an extruder, a method of heating and gelatinizing a slurry of rice flour and rice starch and drying same with a spray dryer, or the like may be used in the present invention.

The area value under the positive peak of the pregelatinized rice flour and the maximum stress of negative peak can be adjusted by, for example, adjusting the treatment conditions (heating time, heating temperature, etc.) in pregelatinizing (gelatinizing) raw material rice, rice flour, or rice starch by heating and the like. In one embodiment, when a slurry of rice flour or rice starch is heated with a drum dryer, the heating time and heating temperature can be adjusted by adjusting the rotation speed and surface temperature of the drum, and the like.

As the pregelatinized rice flour used in used in the present invention, a commercially available product may be used as long as the above-mentioned property value measured using a texture analyzer falls within the specific range. In one embodiment, the present invention can be practiced by analyzing the physical property value of commercially available pregelatinized rice flour by using a texture analyzer, and selecting and using those whose physical property value is within a specific range. Examples of the commercially available products of pregelatinized rice flour that can be used in the present invention include, but are not limited to, "Alpha-Ka Komeko J" manufactured by FRYSTAR Co., Ltd., "Musubi Alpha-Ka Komeko" manufactured by Social Welfare Coporation ICHIMUGIKAI (MUGI NO SATO) Social Farm MOGITATE, "KMS-500", "Komeko Flake Bihun" manufactured by Ueman Ryosyoku Seifunsho Co., Ltd., "JU-800A", "JM-600F" manufactured by Takai Foods Ltd., "My Alpha K" manufactured by Joetsu Starch Co., Ltd., and the like.

The content of the aforementioned pregelatinized rice flour (that is, pregelatinized rice flour with a specific physical property value within a specific range as measured using a texture analyzer) in the powder or liquid composition of the present invention is not particularly limited as long as the outer skin of a filling-wrapping food can be produced. It is generally not less than 3 wt%, preferably not less than 5 wt%, more preferably not less than 10 wt%, particularly preferably not less than 15 wt%, with respect to the solid content of the powder or liquid composition of the present invention. The content of the pregelatinized rice flour in the powder or liquid composition of the present invention is generally not more than 50 wt%, preferably not more than 40 wt%, more preferably not more than 30 wt%, particularly preferably not more than 25 wt%, with respect to the solid content of the powder or liquid composition of the present invention. For example, the content of the pregelatinized rice flour in the powder or liquid composition of the present invention is generally 3 to 50 wt%, preferably 5 to 40 wt%, more preferably 10 to 30 wt%, particularly preferably 15 to 25 wt%, with respect to the solid content of the powder or liquid composition of the present invention.

In the present invention, the "solid content" of the powder or liquid composition of the present invention means the weight of the powder or liquid composition of the present invention excluding water and oil that is liquid at ordinary temperature.

The powder or liquid composition of the present invention may contain thickening polysaccharide in addition to the aforementioned pregelatinized rice flour. By containing thickening polysaccharide, the powder or liquid composition of the present invention imparts appropriate bindability to the dough, thus affording a good texture rich in viscoelasticity.

Examples of the thickening polysaccharide that can be contained in the powder or liquid composition of the present invention include alginic acids (e.g., alginic acid, alginic acid salt, alginic acid ester, etc.), xanthan gum, guar gum, locust bean gum, tara gum, gellan gum, carrageenan, gum tragacanth, gum arabic, caraya gum, tamarind seed gum, psyllium seed gum, curdlan, pectin, glucomannan, agar, pullulan, cellulose derivative (e.g., methylcellulose, carboxymethylcellulose, hydroxypropyl methylcellulose), soybean polysaccharides, chitin, chitosan and the like. From the aspect of imparting good texture, it preferably includes alginic acids, xanthan gum, guar gum, locust bean gum, carrageenan, pectin, agar, or cellulose derivative (e.g., methylcellulose, carboxymethylcellulose, hydroxypropyl methylcellulose), more preferably alginic acids, particularly preferably alginic acid ester. These thickening polysaccharides may be used alone or two or more kinds thereof may be used in combination.

The form of the thickening polysaccharide that can be contained in the powder or liquid composition of the present invention is preferably a powder. The particle size of the thickening polysaccharide is not particularly limited, and the thickening polysaccharide may contain granulated one.

The production method of the thickening polysaccharide that can be contained in the powder or liquid composition of the present invention is not particularly limited, and it can be produced by a method known per se or a method analogous thereto. A commercially available product may also be used.

When the powder or liquid composition of the present invention contains thickening polysaccharide in addition to the aforementioned pregelatinized rice flour, the content of the thickening polysaccharide in the powder or liquid composition of the present invention is preferably not less than 0.2 wt%, more preferably not less than 0.4 wt%, particularly preferably not less than 0.7 wt%, with respect to the solid content of the powder or liquid composition of the present invention, from the aspect of imparting preferred bindability. In this case, the content of the thickening polysaccharide in the powder or liquid composition of the present invention is preferably not more than 7.5 wt%, more preferably not more than 4.5 wt%, particularly preferably not more than 3.0 wt%, with respect to the solid content of the powder or liquid composition of the present invention, from the aspect of suppressing the sticking of a dough and an outer skin to a tool or facility during dough sheet making and forming (during production of the outer skin and covering of the inside ingredient with the outer skin). For example, the content of the thickening polysaccharide in the powder or liquid composition of the present invention is preferably 0.2 to 7.5 wt%, more preferably 0.4 to 4.5 wt%, particularly preferably 0.7 to 3.0 wt%, with respect to the solid content of the powder or liquid composition of the present invention.

When the powder or liquid composition of the present invention contains, in one embodiment, the aforementioned pregelatinized rice flour (that is, pregelatinized rice flour with a specific physical property value within a specific range as measured using a texture analyzer) and thickening polysaccharide, the contents of the pregelatinized rice flour and thickening polysaccharide (each in amount with respect to the solid content of the powder or liquid composition of the present invention) may be any of the following (a) to (i).
(a) pregelatinized rice flour: 3 to 50 wt%, thickening polysaccharide: 0.2 to 7.5 wt%
(b) pregelatinized rice flour: 3 to 50 wt%, thickening polysaccharide: 0.4 to 4.5 wt%
(c) pregelatinized rice flour: 3 to 50 wt%, thickening polysaccharide: 0.7 to 3.0 wt%
(d) pregelatinized rice flour: 5 to 40 wt%, thickening polysaccharide: 0.2 to 7.5 wt%
(e) pregelatinized rice flour: 5 to 40 wt%, thickening polysaccharide: 0.4 to 4.5 wt%
(f) pregelatinized rice flour: 5 to 40 wt%, thickening polysaccharide: 0.7 to 3.0 wt%
(g) pregelatinized rice flour: 15 to 25 wt%, thickening polysaccharide: 0.2 to 7.5 wt%
(h) pregelatinized rice flour: 15 to 25 wt%, thickening polysaccharide: 0.4 to 4.5 wt%
(i) pregelatinized rice flour: 15 to 25 wt%, thickening polysaccharide: 0.7 to 3.0 wt%

The powder or liquid composition of the present invention is preferably substantially free of gluten. In the present invention, that a powder or liquid composition is "substantially free" of gluten means either that (1) the composition does not at all contain gluten, or a food material capable of producing gluten (e.g., wheat flour, etc.), or that (2) the composition contains gluten, or a food material capable of producing gluten in a very small amount (generally not more than 0.1 wt%, preferably not more than 0.01 wt%, with respect to the solid content of the powder or liquid composition of the present invention), which does not cause a problem in wheat allergy. In addition, the "food material capable of producing gluten" refers to a food material that produces gluten by kneading with water added thereto, and specific examples include wheat flour and the like.

The powder or liquid composition of the present invention may contain a powder raw material, a liquid raw material, and the like which are generally used for the preparation of an outer skin of filling-wrapping foods (preferably excluding gluten, and food materials capable of producing gluten) and the like, in addition to rice flour and thickening polysaccharides. For example, the powder composition of the present invention may contain powder raw materials such as β-rice flour (raw flour), grain flour other than rice flour, starch, salt, saccharides, oil and fat powder, egg-yolk powder, albumin powder, whole egg powder, powdered skim milk, amino acid, animal or plant protein, dietary fiber, emulsifier, seasoning, vitamins, minerals, dye, flavor, dextrin, calcinated calcium, preservative, antioxidant, pH adjuster, enzyme agent or the like, or the like. The liquid composition of the present invention may contain liquid raw materials such as liquid oil and fat, oil and fat emulsion, liquid sugar, water or the like, or the like, in addition to these powder raw materials. These powder raw materials, liquid raw materials may each be used alone or two or more kinds thereof may be used in combination.

When the powder or liquid composition of the present invention contains, in one embodiment, β-rice flour in addition to the aforementioned pregelatinized rice flour, the content of the β-rice flour is generally not less than 25 wt%, preferably not less than 35 wt%, with respect to the solid content of the powder or liquid composition of the present invention. In this case, the upper limit of the content of β-rice flour in the powder or liquid composition of the present invention is not particularly limited, but is generally not more than 95 wt%, preferably not more than 84 wt%, with respect to the solid content of the powder or liquid composition of the present invention. For example, the content of the β-rice flour in the powder or liquid composition of the present invention is generally 25 to 95 wt%, preferably 35 to 84 wt%, with respect to the solid content of the powder or liquid composition of the present invention.

The production method of the powder or liquid composition of the present invention is not particularly limited, and it can be produced by a method known per se or a method analogous thereto. For example, the powder composition of the present invention can be produced by mixing the aforementioned pregelatinized rice flour, thickening polysaccharide, and other raw materials, and the like, and the liquid composition of the present invention can be produced by mixing the aforementioned pregelatinized rice flour, thickening polysaccharide, and other powder raw materials and liquid raw materials, and the like.

The powder or liquid composition of the present invention is preferably used for the outer skin of filling-wrapping foods. In the present invention, the "filling-wrapping food" refers to a food product having at least an inside ingredient and an outer skin to cover (wrap) the inside ingredient. Specific examples include gyoza dumpling, xiaolongbao dumpling, shaomai dumpling, wonton, spring roll, baozi dumpling, ravioli and the like. In the present invention, the powder or liquid composition "for an outer skin of a filling-wrapping food" refers to a powder or liquid composition used as a raw material of the outer skin of a filling-wrapping food. In the following, the outer skin of filling-wrapping foods is simply referred at times to as "the outer skin".

The production method of the outer skin by using the powder or liquid composition of the present invention as a raw material is not particularly limited, and the outer skin can be produced by a method known per se or a method analogous thereto. For example, the outer skin can be produced by adding water to the powder or liquid composition of the present invention as necessary, kneading the mixture, roll-forming the obtained dough with a rolling machine (e.g., roll dough sheeter, etc.), then punching out the obtained roll-formed product in a desired shape, and the like. The dough before roll-forming may be extrusion-molded by an extruder, and then subjected to roll-forming. When water is added to the powder composition of the present invention during production of the outer skin, the amount of water to be added is 20 to 60 parts by weight, preferably 25 to 55 parts by weight, per 100 parts by weight of the powder composition of the present invention. The liquid composition of the present invention may be directly kneaded without adding water, and the obtained dough may be subjected to roll-forming. Alternatively, in consideration of water originally contained in the liquid composition, water may be added as appropriate according to the amount of water to be added to the aforementioned powder composition.

The outer skin produced using the powder or liquid composition of the present invention as a raw material is superior in the dough sheet-making property. In the present invention, the "dough sheet-making property" of the outer skin refers to the suitability of the step of rolling the dough using a roll dough sheeter or the like in the production of the outer skin. It can be evaluated by sensory evaluation and the like performed by a panel of experts with the presence or absence of bindability (dough is bound during rolling and no waste material (small pieces of dough that did not bind) is generated), stickiness (dough does not stick to rollers during rolling), and tearing (breakage of dough during rolling) as indices.

In addition, the outer skin produced using the powder or liquid composition of the present invention as a raw material is superior in formability. In the present invention, the "formability" of the outer skin refers to forming suitability when covering the inside ingredient of the filling-wrapping food with the outer skin. It can be evaluated by sensory evaluation and the like performed by a panel of experts with flexibility (the outer skin does not break when it covers the inside ingredient) and softness (softness when the outer skin is deformed) as indices.

The present invention also provides a roll-formed product composition containing pregelatinized rice flour with a specific physical property value within a specific range as measured using a texture analyzer.

In the present invention, the "roll-formed product" is a sheet-like formed product obtained by roll-forming a raw material with viscoelasticity, such as dough and the like.

The pregelatinized rice flour (that is, pregelatinized rice flour with a specific physical property value within a specific range as measured using a texture analyzer) contained in the roll-formed product composition of the present invention is the same as one contained in the aforementioned powder or liquid composition of the present invention, and preferred embodiments are also the same.

The content of the aforementioned pregelatinized rice flour (that is, pregelatinized rice flour with a specific physical property value within a specific range as measured using a texture analyzer) in the roll-formed product composition of the present invention is not particularly limited as long as the outer skin of the filling-wrapping food can be produced. It is generally not less than 2 wt%, preferably not less than 3 wt%, more preferably not less than 6 wt%, particularly preferably not less than 9 wt%, with respect to the roll-formed product composition of the present invention. The content of the pregelatinized rice flour in the roll-formed product composition of the present invention is generally not more than 35 wt%, preferably not more than 25 wt%, more preferably not more than 18 wt%, particularly preferably not more than 15 wt%, with respect to the roll-formed product composition of the present invention. For example, the content of the pregelatinized rice flour in the roll-formed product composition of the present invention is preferably 3 to 35 wt%, more preferably 6 to 25 wt%, particularly preferably 9 to 18 wt%, with respect to the roll-formed product composition of the present invention.

The roll-formed product composition of the present invention may contain thickening polysaccharide in addition to the aforementioned pregelatinized rice flour. By containing thickening polysaccharide, the roll-formed product composition of the present invention imparts appropriate bindability to the dough, thus affording a good texture rich in viscoelasticity.

The thickening polysaccharide contained in the roll-formed product composition of the present invention is the same as one contained in the aforementioned powder or liquid composition of the present invention, and preferred embodiments are also the same.

When the roll-formed product composition of the present invention contains thickening polysaccharide in addition to the aforementioned pregelatinized rice flour, the content of the thickening polysaccharide is preferably not less than 0.1 wt%, more preferably not less than 0.3 wt%, particularly preferably not less than 0.5 wt%, with respect to the roll-formed product composition of the present invention, from the aspect of imparting preferable bindability. In this case, the content of the thickening polysaccharide in the roll-formed product composition of the present invention is preferably not more than 5 wt%, more preferably not more than 3 wt%, particularly preferably not more than 2 wt%, with respect to the roll-formed product composition of the present invention, from the aspect of suppressing the sticking of the outer skin to a tool or facility during forming. For example, the content of the thickening polysaccharide in the roll-formed product composition of the present invention is preferably 0.1 to 5 wt%, more preferably 0.3 to 3 wt%, particularly preferably 0.5 to 2 wt%, with respect to the roll-formed product composition of the present invention.

The roll-formed product composition of the present invention is preferably substantially free of gluten. In the present invention, that a roll-formed product composition is "substantially free" of gluten means either that (1) the composition does not at all contain gluten, or a food material capable of producing gluten (e.g., wheat flour etc.), or that (2) the composition contains gluten, or a food material capable of producing gluten in a very small amount (generally not more than 0.1 wt%, preferably not more than 0.01 wt%, with respect to the roll-formed product composition of the present invention), which does not cause a problem in wheat allergy, as in the aforementioned powder or liquid composition.

The roll-formed product composition of the present invention may contain a raw material generally used for the preparation of an outer skin of a filling-wrapping food (preferably excluding gluten, and a food material capable of producing gluten) and the like in addition to the pregelatinized rice flour and thickening polysaccharides. As such raw material, β-rice flour (raw flour), grain flour other than rice flour, starch, salt, saccharides, liquid sugar, oil and fat powder, liquid oil and fat, oil and fat emulsion, egg-yolk powder, albumin powder, whole egg powder, powdered skim milk, amino acid, animal or plant protein, dietary fiber, emulsifier, seasoning, vitamins, minerals, dye, flavor, dextrin, calcinated calcium, preservative, antioxidant, pH adjuster, enzyme agent, water, brine water, animal or plant oil and fat, alcohol, animal or plant extract, and the like can be mentioned. These raw materials may each be used alone or two or more kinds thereof may be used in combination.

When the roll-formed product composition of the present invention contains β-rice flour in addition to the aforementioned pregelatinized rice flour in one embodiment, the content of the β-rice flour is generally not less than 20 wt%, preferably not less than 30 wt%, with respect to the roll-formed product composition of the present invention. In this case, the upper limit of the content of the β-rice flour in the roll-formed product composition of the present invention is not particularly limited, and is generally not more than 80 wt%, preferably not more than 70 wt%, with respect to the roll-formed product composition of the present invention. For example, the content of the β-rice flour in the roll-formed product composition of the present invention is generally 20 to 80 wt%, preferably 30 to 70 wt%, with respect to the roll-formed product composition of the present invention.

The water content of the roll-formed product composition of the present invention is preferably not less than 15 wt%, more preferably not less than 20 wt%, particularly preferably not less than 25 wt%, with respect to the roll-formed product composition of the present invention. The water content of the roll-formed product composition of the present invention is preferably not more than 45 wt%, more preferably not more than 40 wt%, particularly preferably not more than 35 wt%, with respect to the roll-formed product composition of the present invention. For example, the water content of the roll-formed product composition of the present invention is preferably 15 to 45 wt%, more preferably 20 to 40 wt%, particularly preferably 25 to 35 wt%, with respect to the roll-formed product composition of the present invention.

When the roll-formed product composition of the present invention contains, in one embodiment, the aforementioned pregelatinized rice flour (that is, pregelatinized rice flour with a specific physical property value within a specific range as measured using a texture analyzer) and thickening polysaccharide, the contents of the pregelatinized rice flour and thickening polysaccharide and water (each in amount with respect to the solid content of the powder or liquid composition of the present invention) may be any of the following (a) to (i).
(a) pregelatinized rice flour: 3 to 35 wt%, thickening polysaccharide: 0.1 to 5 wt%, water content: 15 to 45 wt%
(b) pregelatinized rice flour: 3 to 35 wt%, thickening polysaccharide: 0.3 to 3 wt%, water content: 20 to 40 wt%
(c) pregelatinized rice flour: 3 to 35 wt%, thickening polysaccharide: 0.5 to 2 wt%, water content: 25 to 35 wt%
(d) pregelatinized rice flour: 6 to 25 wt%, thickening polysaccharide: 0.1 to 5 wt%, water content: 15 to 45 wt%
(e) pregelatinized rice flour: 6 to 25 wt%, thickening polysaccharide: 0.3 to 3 wt%, water content: 20 to 40 wt%
(f) pregelatinized rice flour: 6 to 25 wt%, thickening polysaccharide: 0.5 to 2 wt%, water content: 25 to 35 wt%
(g) pregelatinized rice flour: 9 to 18 wt%, thickening polysaccharide: 0.1 to 5 wt%, water content: 15 to 45 wt%
(h) pregelatinized rice flour: 9 to 18 wt%, thickening polysaccharide: 0.3 to 3 wt%, water content: 20 to 40 wt%
(i) pregelatinized rice flour: 9 to 18 wt%, thickening polysaccharide: 0.5 to 2 wt%, water content: 25 to 35 wt%

The thickness of the roll-formed product composition of the present invention is not particularly limited and can be appropriately set according to the kind of the filling-wrapping food and the like. It is generally 0.3 to 3.0 mm, preferably 0.5 to 2.5 mm. The shape and size of the roll-formed product composition of the present invention are not particularly limited, and can be appropriately set according to the kind of the filling-wrapping food and the like.

The production method of the roll-formed product composition of the present invention is not particularly limited, and the roll-formed product can be produced by a method known per se or a method analogous thereto. For example, it can be produced by adding water to a powder raw material containing pregelatinized rice flour (the powder composition of the present invention may also be used), kneading the mixture, and roll-forming the obtained dough with a rolling machine (e.g., roll dough sheeter, etc.), and punching out the dough sheet in a desired shape as necessary, and the like. A dough before roll-forming may be extrusion-molded by an extruder, and then subjected to roll-forming.

The roll-formed product composition of the present invention can be frozen and provided as a frozen product. The roll-formed product composition of the present invention can also be provided as a refrigerated food (including a chilled food).

The roll-formed product composition of the present invention is superior in the formability and dough sheet-making property, and is preferably used for the outer skin of filling-wrapping foods. In the present invention, the roll-formed product composition "for the outer skin of filling-wrapping foods" refers to a roll-formed product composition to be used as the outer skin of a filling-wrapping food.

The roll-formed product composition of the present invention may be used as a dough sheet.

As mentioned above, the roll-formed product composition of the present invention is preferably used for the outer skin of filling-wrapping foods, and the present invention also provides a filling-wrapping food containing at least an inside ingredient and an outer skin covering the inside ingredient, wherein the outer skin includes the roll-formed product composition of the present invention (that is, roll-formed product composition containing pregelatinized rice flour with a specific physical property value within a specific range as measured using a texture analyzer).

The kind of the filling-wrapping food of the present invention is not particularly limited, and examples thereof include gyoza dumpling, xiaolongbao dumpling, shaomai dumpling, wonton, spring roll, baozi dumpling, ravioli, and the like, with preference given to gyoza dumpling.

The inside ingredient of the filling-wrapping food of the present invention may be appropriately produced according to the kind of the filling-wrapping food. The raw materials and production methods used for the production are not particularly limited.

In the filling-wrapping food of the present invention, the outer skin may cover the entire inside ingredient, or may cover a part of the inside ingredient.

The production method of the filling-wrapping food of the present invention is not particularly limited as long as it includes covering the inside ingredient with the outer skin containing the roll-formed product composition of the present invention (that is, roll-formed product composition containing pregelatinized rice flour with a specific physical property value within a specific range as measured using a texture analyzer), and it can be produced by a method known per se or a method analogous thereto, according to the kind of the filling-wrapping food, and the like.

The filling-wrapping food of the present invention can be frozen and provided to consumers as a frozen product. The filling-wrapping food of the present invention can also be provided as a refrigerated food (including a chilled food). The filling-wrapping food of the present invention may be provided after heat cooking (e.g., fried, steamed, boiled, deep-fried, etc.) or may be provided without heat cooking.

The present invention also provides an outer skin for filling-wrapping foods, which contains a roll-formed product composition containing pregelatinized rice flour with a specific physical property value within a specific range as measured using a texture analyzer (at times referred to as "the outer skin of the present invention" in the present specification).

In the present invention, the outer skin "for filling-wrapping foods" refers to the outer skin to be used for the production of filling-wrapping foods.

The roll-formed product composition contained in the outer skin of the present invention is the same as the aforementioned roll-formed product composition of the present invention, and preferred embodiments are also the same.

The production method of the outer skin of the present invention is not particularly limited, and the outer skin can be produced by a method known per se or a method analogous thereto. For example, the outer skin can be produced by adding water to a powder or liquid composition containing pregelatinized rice flour(the powder or liquid composition of the present invention may also be used) as necessary, kneading the mixture, roll-forming the obtained dough with a rolling machine (e.g., roll noodle-making machine, etc.), then cutting or punching out the dough in a desired shape, and the like. The dough before roll-forming may be extrusion-molded by an extruder, and then subjected to roll-forming.

The present invention is further explained in detail in the following by referring to the following Examples, which are not to be construed as limitative.

Unless particularly indicated, all the raw materials used in the following Examples are commercially available for food products.

### [Example]

### <Experimental Example 1: Analysis of pregelatinized rice flour>

Respective commercially available pregelatinized rice flours (Examples 1 to 7, Comparative Examples 1 to 3) shown in Table 1 below were measured as follows for the "area value under positive peak" and "maximum stress of negative peak" using "Texture Analyzer TA.XT.plus" manufactured by EKO Instruments Co., Ltd.

**[Table 1]**

| | general name | product name | manufacturer |
|---|---|---|---|
| Example 1 | pregelatinized rice flour | Alpha-Ka Komeko J | FRYSTAR Co., Ltd. |
| Example 2 | pregelatinized rice flour | Musubi Alpha-Ka Komeko | Social Welfare Coporation ICHIMUGIKAI (MUGI NO SATO) Social Farm MOGITATE |
| Example 3 | pregelatinized glutinous rice flour | KMS-500 | Ueman Ryosyoku Seifunsho Co., Ltd. |
| Example 4 | pregelatinized rice flour | JU-800A | Takai Foods Ltd. |
| Example 5 | pregelatinized glutinous rice flour | JM-600F | Takai Foods Ltd. |
| Example 6 | pregelatinized rice flour | Komeko Flake Bihun | Ueman Ryosyoku Seifunsho Co., Ltd. |
| Example 7 | pregelatinized rice starch | My Alpha K | Joetsu Starch Co., Ltd. |
| Comparative Example 1 | pregelatinized rice flour | Kokusan Uruchimai Alpha Ko | Yamaguchi Shouten Co., Ltd. |
| Comparative Example 2 | pregelatinized rice flour | Ricemeal | Matsuya Co., Ltd. |
| Comparative Example 3 | pregelatinized rice flour | Shiromijin | TATEYAMA. Co., Ltd. |

(1) Pregelatinized rice flour (30 g) as a sample was dissolved in purified water (90 g) at 25°C, stirred in a 500 mL beaker with a bottom diameter of 9 cm by using "KAI Multi Blender DK5033" manufactured by Kai Corporation (attachment: masher) at 25°C, stirring speed 17000 rpm for 2 min, and visually observed to confirm that the solution was uniformly mixed.
(2) The obtained pregelatinized rice flour aqueous solution was filled up by leveling into a cup container ("IK55 floral PS" manufactured by ITOKEI. Co., Ltd., opening diameter 55 mm, height 42 mm, volume 65 mL). The pregelatinized rice flour aqueous solution was filled by filling the cup container such that the air was not substantially contained, and leveling off the top surface thereof with a palette knife to make a flat surface.
(3) The cup container filled with the pregelatinized rice flour aqueous solution was set on a texture analyzer ("Texture Analyzer TA.XT.plus" manufactured by EKO Instruments Co., Ltd.) equipped with a 25 mm diameter acrylic cylinder as a jig such that the cup container was directly under the position of the jig (position at which the center of the jig overlapped the center of the cup container when the jig was descended directly down below and viewed from directly above the jig).
(4) 5 Minutes after the completion of the stirring in the aforementioned (1) and at 25°C, the jig attached to the aforementioned texture analyzer was descended by 25 mm at a speed of 2 mm/sec with a load of 100 g from the position (position shown in Fig. 1) at a height of 67 mm from the bottom of the installed cup container to bring same into contact with the gelatinized rice flour aqueous solution filled in the cup container, further descended straight down by 10 mm at the same speed, and ascended by 35 mm to its original position at a speed of 2 mm/sec. The settings of the texture analyzer were as follows. <Setting of texture analyzer>
   ·Test Mode: Compression
   ·Test Speed: 2 mm/sec
   ·Post-Test Speed: 2 mm/sec
   ·Target Mode: Distance
   ·Force: 100 g
   ·Distance: 35 mm
   ·Trigger Type: Button
   ·Trigger Force: 5 g
(5) The stress (g) applied to the jig in 35 seconds from the start of the descending to the return to the original position of the jig in the aforementioned (4) was detected with a detection threshold value (Trigger Force) of 5 g, and a stress-time curve plotting the stress (g) on the vertical axis and the time (sec) on the horizontal axis was drawn.
(6) The peak area (g-sec) of the first peak and peak top stress (g) of the second peak in the obtained stress-time curve were determined.
(7) The aforementioned operations (4) to (6) were repeated six times in total within 20 minutes from the completion of the stirring in the aforementioned (1).
(8) Among the obtained peak areas of the 1st to the 6th measurements, the average value of the peak areas of the 2nd to the 6th measurements was calculated, and the average value was taken as the "area value under positive peak". Among the obtained peak top stress of the 1st to the 6th measurements, the average value of the peak top stress of the 2nd to the 6th measurements was calculated, and the average value was taken as the "maximum stress of negative peak".

The results are shown in the following Table 2.

**[Table 2]**

| | area value under positive peak (g-sec) | maximum stress of negative peak (g) |
|---|---|---|
| Example 1 | 82.4 | -10.6 |
| Example 2 | 97.4 | -11.7 |
| Example 3 | 30.8 | -3.3 |
| Example 4 | 89.3 | -11.7 |
| Example 5 | 31.8 | -3.6 |
| Example 6 | 106.7 | -15.1 |
| Example 7 | 185.1 | -20.1 |
| Comparative Example 1 | 638.7 | -114.2 |
| Comparative Example 2 | 211.1 | -30.9 |
| Comparative Example 3 | 1993.1 | -336.2 |

In addition, the gelatinization degree of the pregelatinized rice flours of Examples 1 to 7 and Comparative Examples 1 to 3 was measured by the glucoamylase second method. As a result, the gelatinization degree of the pregelatinized rice flours of Examples 1 to 7 was 91 to 100%, and the gelatinization degree of the pregelatinized rice flours of Comparative Examples 1 to 3 was 87 to 97%.

### <Experimental Example 2: Preparation of roll-formed product (dough sheet)>

### (Roll-formed product of Example 1)

β-Rice flour ("Okome No Kona Hakuriki Komeko R" manufactured by Namisato Corporation), pregelatinized rice flour ("Alpha-Ka Komeko J" manufactured by FRYSTAR Co., Ltd.) of Example 1 in Experimental Example 1, and alginic acid ester ("Konbusan 501" manufactured by KIMICA Corporation) were mixed at the mixing ratio shown in the following Table 3, city water was added at the mixing ratio shown in the following Table 3, and they were kneaded at ordinary temperature for 5 min using a mixer ("KitchenAid KSM5" manufactured by FMI Corporation). The obtained dough was rolled to a thickness of 0.75 mm with a roll dough sheeter ("FNH-21" manufactured by Tosei Kogyo Co., Ltd.) at ordinary temperature to produce a roll-formed product (dough sheet).

**[Table 3]**

| raw material | mixing ratio (wt%) |
|---|---|
| β-rice flour | 58.8 |
| pregelatinized rice flour | 12.4 |
| alginic acid ester | 1.0 |
| city water | 27.8 |
| total | 100.0 |

### (Roll-formed products of Examples 2 to 7 and Comparative Examples 1 to 3)

In the same manner as in Example 1 except that the respective pregelatinized rice flours of Examples 2 to 7 and Comparative Examples 1 to 3 (commercially available pregelatinized rice flours described in Table 1) in Experimental Example 1 were used instead of the pregelatinized rice flour of Example 1 in Experimental Example 1, each of the roll-formed products (dough sheets) of Examples 2 to 7 and Comparative Examples 1 to 3 was produced.

### (Evaluation of dough sheet-making property)

The respective roll-formed products of Examples 1 to 7 and Comparative Examples 1 to 3 were evaluated for the suitability (dough sheet-making property) when the dough was rolled using a roll dough sheeter. Specifically, a panel of three experts graded the presence or absence of bindability (dough was bound during rolling and no waste material (small pieces of dough that did not bind) was generated, the stickiness (dough does not stick to rollers during rolling), and tearing (breakage of dough during rolling) by consensus in 1-point increments based on the following criteria.

### [Evaluation criteria of bindability]

5: no generation of waste material at all
4: slight generation of waste material
3: generation of some waste material
2: generation of a large amount of waste material
1: dough does not bind, mostly resulting in waste material

### [Evaluation criteria of stickiness]

5: dough does not at all stick to roller
4: dough slightly sticks to roller
3: dough rather sticks to roller
2: dough sticks to roller
1: dough sticks to whole surface of roller

### [Evaluation criteria of presence or absence of tearing]

5: dough is not cut at all
4: dough is slightly cut
3: dough is sometimes cut
2: dough is frequently cut
1: dough is always cut

### (Evaluation of formability)

The respective roll-formed products of Examples 1 to 7 and Comparative Examples 1 to 3 were evaluated for the forming suitability (formability). Specifically, each roll-formed product was cut into a 82 mm×92 mm ellipse to produce the outer skin. Then, an inside ingredient (10 g) obtained by kneading minced meat, minced vegetables, seasoning, and the like were covered with the outer skin by a mechanical molder to produce a crescent-shaped gyoza dumpling. A panel of three experts graded flexibility (the outer skin (roll-formed product) does not break when it covers the inside ingredient) and softness (softness when the outer skin (roll-formed product) was deformed) by consensus in 1-point increments based on the following criteria.

### [Evaluation criteria of flexibility]

5: outer skin is not broken at all
4: outer skin is slightly cracked
3: outer skin is cracked
2: outer skin contains small tear
1: outer skin is widely torn

### [Evaluation criteria of softness]

5: soft
4: slightly hard
3: rather hard
2: considerably hard
1: hard

The evaluation results of the dough sheet-making property and formability of the outer skin of the respective roll-formed products of Examples 1 to 7 and Comparative Examples 1 to 3 are shown in the following Table 4.

**[Table 4]**

| evaluation item | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| dough sheet-making property | bindability | 5 | 5 | 5 | 5 | 5 | 4 | 5 | 4 | 4 | 2 |
| | stickiness | 5 | 4 | 4 | 4 | 4 | 5 | 4 | 4 | 5 | 2 |
| | tearing | 5 | 5 | 4 | 5 | 5 | 5 | 5 | 2 | 3 | 2 |
| formability | flexibility | 5 | 5 | 4 | 5 | 4 | 4 | 5 | 2 | 2 | 1 |
| | softness | 5 | 5 | 5 | 5 | 5 | 4 | 4 | 2 | 2 | 2 |

As is clear from the results shown in Table 4, the roll-formed products (dough sheets) of Examples 1 to 7 containing pregelatinized rice flour having an area value under positive peak of 30.8 to 185.1 g·sec as measured using a texture analyzer were all superior in the dough sheet-making property and formability. From the results, it was confirmed that the outer skin for filling-wrapping foods having good dough sheet-making property and good formability can be produced utilizing pregelatinized rice flour showing an area value under positive peak within a specific range, and without using gluten, and a food material capable of producing gluten (e.g., wheat flour, etc.).

### <Experimental Example 3>

### (Roll-formed products of Examples 8 to 15)

β-Rice flour ("Okome No Kona Hakuriki Komeko R" manufactured by Namisato Corporation), pregelatinized rice flour ("Alpha-Ka Komeko J" manufactured by FRYSTAR Co., Ltd.) of Example 1 in Experimental Example 1, and thickening polysaccharide (xanthan gum, guar gum, locust bean gum, κ-carrageenan, pectin, agar, methylcellulose, hydroxypropyl methylcellulose) shown in the following Table 5 were mixed at the mixing ratio shown in the following Table 6, city water was added at the mixing ratio shown in the following Table 6, and they were kneaded at ordinary temperature for 5 min using a kneading machine ("KitchenAid KSM5" manufactured by FMI Corporation) at ordinary temperature. The obtained dough was rolled to a thickness of 0.75 mm with a roll dough sheeter ("FNH-21" manufactured by Tosei Kogyo Co., Ltd.) at ordinary temperature to produce the respective roll-formed products (dough sheets) of Examples 8 to 15.

**[Table 5]**

| Example | thickening polysaccharide | manufacturer and product name |
|---|---|---|
| 8 | xanthan gum | "ECHO GUM" manufactured by DSP GOKYO FOOD & CHEMICAL Co., Ltd. |
| 9 | guar gum | "VIDOCREM A" manufactured by UNITEC FOODS Co., Ltd. |
| 10 | locust bean gum | "Spoon Gel LBG-3" manufactured by Mitsui Sugar Co., Ltd. |
| 11 | K-carrageenan | "Carraginin CSK-1" manufactured by San-Ei Gen F.F.I., Inc. |
| 12 | pectin | "Neosoft P-481" manufactured by Taiyo Kagaku Co. Ltd. |
| 13 | agar | "Ina Kanten UZ-5" manufactured by Ina Food Industry Co., Ltd. |
| 14 | methylcellulose | "Metcell A4M" manufactured by UNITEC FOODS Co., Ltd. |
| 15 | hydroxypropyl methylcellulose | "Metcell K4M" manufactured by UNITEC FOODS Co., Ltd. |

**[Table 6]**

| raw material | mixing ratio (wt%) | | | | | | | |
|---|---|---|---|---|---|---|---|---|
| | Example 8 | Example 9 | Example 10 | Example 11 | Example 12 | Example 13 | Example 14 | Example 15 |
| β-rice flour | 58.8 | 58.8 | 59.2 | 59.2 | 58.8 | 58.8 | 59.1 | 59.1 |
| pregelatinized rice flour | 12.4 | 12.4 | 12.4 | 12.4 | 12.4 | 12.4 | 12.4 | 12.4 |
| xanthan gum | 1.0 | | | | | | | |
| guar gum | | 1.0 | | | | | | |
| locust bean gum | | | 0.6 | | | | | |
| K-carrageenan | | | | 0.6 | | | | |
| pectin | | | | | 1.0 | | | |
| agar | | | | | | 1.0 | | |
| methylcellulose | | | | | | | 0.7 | |
| hydroxypropyl methylcellulose | | | | | | | | 0.7 |
| city water | 27.8 | 27.8 | 27.8 | 27.8 | 27.8 | 27.8 | 27.8 | 27.8 |
| total | 100 | 100 | 100 | 100 | 100 | 100 | 100 | 100 |

### (Evaluation of dough sheet-making property and formability)

In the same manner as in Experimental Example 2, the respective roll-formed products of Examples 8 to 15 were evaluated for the dough sheet-making property and the formability of the outer skin. The evaluation results are shown in the following Table 7.

**[Table 7]**

| evaluation item | | Example | | | | | | | |
|---|---|---|---|---|---|---|---|---|---|
| | | 8 | 9 | 10 | 11 | 12 | 13 | 14 | 15 |
| dough sheet-making property | bindability | 5 | 5 | 5 | 5 | 5 | 5 | 5 | 4 |
| | stickiness | 4 | 5 | 4 | 4 | 4 | 4 | 4 | 4 |
| | tearing | 4 | 5 | 5 | 5 | 5 | 4 | 5 | 4 |
| formability | flexibility | 4 | 4 | 4 | 4 | 4 | 4 | 5 | 4 |
| | softness | 5 | 4 | 5 | 5 | 4 | 4 | 5 | 4 |

As is clear from the results shown in Table 7, the roll-formed products (Examples 8 to 15) produced in the same manner as in Example 1 of Experimental Example 2 except that other thickening polysaccharide (xanthan gum, guar gum, locust bean gum, κ-carrageenan, pectin, agar, methylcellulose, hydroxypropyl methylcellulose) was used instead of alginic acid ester were also superior in the dough sheet-making property and formability, similar to the case of using alginic acid ester.

### <Experimental Example 4>

### (Roll-formed products of Examples 16 to 18)

β-Rice flour ("Okome No Kona Hakuriki Komeko R" manufactured by Namisato Corporation), pregelatinized rice flour ("Alpha-Ka Komeko J" manufactured by FRYSTAR Co., Ltd.) of Example 1 in Experimental Example 1, and alginic acid ester ("Konbusan 501" manufactured by KIMICA Corporation) were mixed at the mixing ratio shown in the following Table 8, city water was added at the mixing ratio shown in the following Table 8, and they were kneaded at ordinary temperature for 5 min using a mixer ("KitchenAid KSM5" manufactured by FMI Corporation). The obtained dough was rolled to a thickness of 0.75 mm with a roll dough sheeter ("FNH-21" manufactured by Tosei Kogyo Co., Ltd.) at ordinary temperature to produce roll-formed products (dough sheets) of Examples 16 to 18.

**[Table 8]**

| raw material | mixing ratio (wt%) | | |
|---|---|---|---|
| | Example 16 | Example 17 | Example 18 |
| β-rice flour | 68.2 | 66.2 | 41.2 |
| pregelatinized rice flour | 3.0 | 5.0 | 30.0 |
| alginic acid ester | 1.0 | 1.0 | 1.0 |
| city water | 27.8 | 27.8 | 27.8 |
| total | 100 | 100 | 100 |

### (Evaluation of dough sheet-making property and formability)

In the same manner as in Experimental Example 2, the respective roll-formed products of Examples 16 to 18 were evaluated for the dough sheet-making property and the formability of the outer skin. Evaluation results are shown in the following Table 9.

**[Table 9]**

| evaluation item | | Example | | |
|---|---|---|---|---|
| | | 16 | 17 | 18 |
| dough sheet-making property | bindability | 4 | 4 | 5 |
| | stickiness | 4 | 4 | 3 |
| | tearing | 4 | 4 | 4 |
| formability | flexibility | 3 | 3 | 5 |
| | softness | 3 | 3 | 5 |

As is clear from the results shown in Table 9, all roll-formed products (dough sheets) of Examples 16 to 18 containing 3 to 30 wt% of pregelatinized rice flour showing an area value under positive peak within a specific range as measured using a texture analyzer were superior in the dough sheet-making property and formability.

### <Experimental Example 5>

### (Roll-formed product of Example 19)

β-Rice flour ("Okome No Kona Hakuriki Komeko R" manufactured by Namisato Corporation) and pregelatinized rice flour ("Alpha-Ka Komeko J" manufactured by FRYSTAR Co., Ltd.) of Example 1 in Experimental Example 1 were mixed at the mixing ratio shown in the following Table 10, city water was added at the mixing ratio shown in the following Table 10, and they were kneaded at ordinary temperature for 5 min using a mixer ("KitchenAid KSM5" manufactured by FMI Corporation). The dough after kneading was extruded into a thickness of 8 mm and a width of 58 mm from an extruder, and the obtained dough was rolled to a thickness of 0.75 mm with a roll dough sheeter ("FNH-21" manufactured by Tosei Kogyo Co., Ltd.) at ordinary temperature to produce a roll-formed product (dough sheet).

**[Table 10]**

| raw material | mixing ratio (wt%) |
|---|---|
| β-rice flour | 59.8 |
| pregelatinized rice flour | 12.4 |
| city water | 27.8 |
| total | 100.0 |

### (Evaluation of dough sheet-making property and formability)

In the same manner as in Experimental Example 2, the roll-formed product of Example 19 was evaluated for the dough sheet-making property and the formability of the outer skin. The evaluation results are shown in the following Table 11.

**[Table 11]**

| evaluation item | | Example 19 |
|---|---|---|
| dough sheet-making property | bindability | 5 |
| | stickiness | 5 |
| | tearing | 5 |
| formability | flexibility | 5 |
| | softness | 5 |

As is clear from the results shown in Table 11, the roll-formed product of Example 19 which was produced without using thickening polysaccharide showed dough sheet-making property and formability equivalent or superior to those when thickening polysaccharide was used.

Each of the roll-formed products of Examples 1 to 19 was cut into a 82 mm×92 mm ellipse to produce the outer skin. Then, an inside ingredient (10 g) obtained by kneading minced meat, minced vegetables, seasoning, and the like was covered with the outer skin by a mechanical molder to produce a crescent-shaped gyoza dumpling which was frozen at -30°C for 60 min. The respective frozen gyoza dumplings were cooked using a household gas cooking stove and a frying pan with a diameter of 26 cm, with 12 frozen gyoza dumplings arranged side by side at one time. Twelve frozen gyoza dumplings and 70 mL of water were placed in the frying pan with a small amount of oil, covered with a lid, and steamed for 5 min over medium heat. After completion of steaming, the lid was removed and heating was continued for 2 min to make a brown fried surface of the gyoza dumplings. The obtained pan-fried gyoza dumplings all had a good texture of the outer skin.

### [Industrial Applicability]

According to the present invention, outer skins for filling-wrapping foods, which can show good dough sheet-making property and good formability, even when produced without using gluten or a food material (e.g., wheat flour, etc.) capable of producing gluten, can be provided.

The present invention can also provide powder or liquid compositions preferably used as raw materials of the outer skin of filling-wrapping foods which shows good dough sheet-making property and good formability.

The present invention can also provide roll-formed product compositions preferably used as the outer skin of filling-wrapping foods which shows good dough sheet-making property and good formability.

The present invention can also provide filling-wrapping foods in which an inside ingredient is covered with an outer skin showing good dough sheet-making property and good formability.

This application is based on a patent application No. 2020-059078 filed in Japan (filing date: March 27, 2020), the contents of which are incorporated in full herein.

## Claims

1. A powder or liquid composition for an outer skin of a filling-wrapping food, comprising a pregelatinized rice flour having an area value under positive peak of 9 to 206 g·sec as measured using a texture analyzer and according to the following method:
[measurement method of area value under positive peak]
(1) pregelatinized rice flour as a sample is dissolved in a 3 weight-fold amount of water, and stirred in a 500 mL beaker with a bottom diameter of 9 cm at 25°C, stirring speed 17000 rpm for 2 minutes
(2) the obtained pregelatinized rice flour aqueous solution is filled up by leveling into a 65 mL cup container with opening diameter 55 mm and height 42 mm
(3) the cup container filled with the pregelatinized rice flour aqueous solution is set on a texture analyzer equipped with a 25 mm diameter acrylic cylinder as a jig such that the cup container is directly under the jig
(4) 5 minutes after completion of the stirring in the aforementioned (1), at 25°C, the jig attached to the aforementioned texture analyzer is descended by 25 mm at a speed of 2 mm/sec with a load of 100 g from the position at a height of 67 mm from the bottom of the installed cup container to bring same into contact with the gelatinized rice flour aqueous solution filled in the cup container, further descended straight down by 10 mm at the same speed, and ascended by 35 mm to its original position at a speed of 2 mm/sec
(5) the stress (g) applied to the jig in 35 seconds from the start of the descending to the return to the original position of the jig in the aforementioned (4) is detected with a detection threshold value of 5 g, and a stress-time curve plotting the stress (g) on the vertical axis and the time (sec) on the horizontal axis is drawn
(6) the peak area (g-sec) of the first peak in the obtained stress-time curve is determined
(7) the aforementioned operations (4) to (6) are repeated six times in total within 20 minutes from the completion of the stirring in the aforementioned (1)
(8) among the obtained peak areas of the 1st to the 6th measurements, the average value of the peak areas of the 2nd to the 6th measurements is calculated, and the average value is taken as the "area value under positive peak".

2. The powder or liquid composition according to claim 1, wherein the aforementioned pregelatinized rice flour has a maximum stress of negative peak of -25 to 0 g as measured using a texture analyzer and according to the following method:
[measurement method of maximum stress of negative peak]
(1) pregelatinized rice flour as a sample is dissolved in a 3 weight-fold amount of water, and stirred in a 500 mL beaker with a bottom diameter of 9 cm at 25°C, stirring speed 17000 rpm for 2 minutes
(2) the obtained pregelatinized rice flour aqueous solution is filled up by leveling into a 65 mL cup container with opening diameter 55 mm and height 42 mm
(3) the cup container filled with the pregelatinized rice flour aqueous solution is set on a texture analyzer equipped with a 25 mm diameter acrylic cylinder as a jig such that the cup container is directly under the jig
(4) 5 minutes after completion of the stirring in the aforementioned (1), at 25°C, the jig attached to the aforementioned texture analyzer is descended by 25 mm at a speed of 2 mm/sec with a load of 100 g from the position at a height of 67 mm from the bottom of the installed cup container to bring same into contact with the gelatinized rice flour aqueous solution filled in the cup container, further descended straight down by 10 mm at the same speed, and ascended by 35 mm to its original position at a speed of 2 mm/sec
(5) the stress (g) applied to the jig in 35 seconds from the start of the descending to the return to the original position of the jig in the aforementioned (4) is detected with a detection threshold value of 5 g, and a stress-time curve plotting the stress (g) on the vertical axis and the time (sec) on the horizontal axis is drawn
(6) the peak top stress (g) of the second peak in the obtained stress-time curve is determined
(7) the aforementioned operations (4) to (6) are repeated six times in total within 20 minutes from the completion of the stirring in the aforementioned (1)
(8) among the obtained peak top stress of the 1st to the 6th measurements, the average value of the peak top stress of the 2nd to the 6th measurements is calculated, and the average value is taken as the "maximum stress of negative peak".

3. The powder or liquid composition according to claim 1 or 2, further comprising a thickening polysaccharide.

4. The powder or liquid composition according to any one of claims 1 to 3, further comprising a β-rice flour.

5. The powder or liquid composition according to any one of claims 1 to 4, wherein a content of the pregelatinized rice flour is 3 to 50 wt% with respect to a solid content of the powder or liquid composition.

6. The composition according to any one of claims 1 to 5, wherein the composition is substantially free of gluten.

7. A roll-formed product composition for an outer skin of a filling-wrapping food, comprising a pregelatinized rice flour having an area value under positive peak of 9 to 206 g·sec as measured using a texture analyzer and according to the method described in claim 1.

8. The roll-formed product composition according to claim 7, wherein the aforementioned pregelatinized rice flour has a maximum stress of negative peak of -25 to 0 g as measured using a texture analyzer and according to the method described in claim 2.

9. The roll-formed product composition according to claim 7 or 8, further comprising a thickening polysaccharide.

10. The roll-formed product composition according to any one of claims 7 to 9, further comprising a β-rice flour and water.

11. The roll-formed product composition according to any one of claims 7 to 10, wherein a content of the pregelatinized rice flour is 3 to 35 wt% with respect to the roll-formed product composition.

12. The roll-formed product composition according to any one of claims 7 to 11, wherein the composition is substantially free of gluten.

13. A filling-wrapping food comprising at least an inside ingredient and an outer skin covering the inside ingredient, wherein the outer skin comprises a roll-formed product comprising a pregelatinized rice flour having an area value under positive peak of 9 to 206 g·sec as measured using a texture analyzer and according to the method described in claim 1.

14. The filling-wrapping food according to claim 13, wherein the aforementioned pregelatinized rice flour has a maximum stress of negative peak of -25 to 0 g as measured using a texture analyzer and according to the method described in claim 2.

15. The filling-wrapping food of any one according to claim 13 or 14, wherein the roll-formed product composition further comprises a thickening polysaccharide.

16. The filling-wrapping food according to any one of claims 13 to 15, wherein the roll-formed product composition further comprises a β-rice flour and water.

17. The filling-wrapping food according to any one of claims 13 to 16, wherein a content of the pregelatinized rice flour in the roll-formed product composition is 3 to 35 wt% with respect to the roll-formed product composition.

18. The filling-wrapping food according to any one of claims 13 to 17, wherein the roll-formed product composition is substantially free of gluten.

19. An outer skin for a filling-wrapping food, comprising a roll-formed product comprising a pregelatinized rice flour having an area value under positive peak of 9 to 206 g·sec as measured using a texture analyzer and according to the method described in claim 1.

20. The outer skin according to claim 19, wherein the aforementioned pregelatinized rice flour has a maximum stress of negative peak of -25 to 0 g as measured using a texture analyzer and according to the method described in claim 2.

21. The outer skin according to claim 19 or 20, wherein the roll-formed product composition further comprises a thickening polysaccharide.

22. The outer skin according to any one of claims 19 to 21, wherein the roll-formed product composition further comprises a β-rice flour and water.

23. The outer skin according to any one of claims 19 to 22, wherein a content of the pregelatinized rice flour in the roll-formed product composition is 3 to 35 wt% with respect to the roll-formed product composition.

24. The outer skin according to any one of claims 19 to 23, wherein the roll-formed product composition is substantially free of gluten.

25. A method for producing an outer skin of a filling-wrapping food, comprising adding water as necessary to a powder or liquid composition comprising a pregelatinized rice flour having an area value under positive peak of 9 to 206 g·sec as measured using a texture analyzer and according to the method described in claim 1, and roll-forming the mixture.

26. The production method according to claim 25, wherein the aforementioned pregelatinized rice flour has a maximum stress of negative peak of -25 to 0 g as measured using a texture analyzer and according to the method described in claim 2.

27. The production method according to claim 25 or 26, wherein the powder or liquid composition further comprises a thickening polysaccharide.

28. The production method according to any one of claims 25 to 27, wherein the powder or liquid composition further comprises a β-rice flour.

29. The production method according to any one of claims 25 to 28, wherein a content of the pregelatinized rice flour in the powder or liquid composition is 3 to 50 wt% with respect to a solid content of the powder or liquid composition.

30. The production method according to any one of claims 25 to 29, wherein the powder or liquid composition is substantially free of gluten.
